# EUROPÄISCHE PATENTANMELDUNG

(11) **EP 0 686 839 A2**
(43) Veröffentlichungstag der Anmeldung: **13.12.1995**
(21) Anmeldenummer: 95108419.3
(22) Anmeldetag: 01.06.1995
(51) Int. Cl.: G01L 5/13, G01L 5/16

(54) **Anhängerkupplung mit einem Kraftaufnehmer**

(30) Priorität: 07.06.1994 DE 4419673
(71) Anmelder: HOTTINGER BALDWIN MESSTECHNIK GMBH, D-64293 Darmstadt (DE)
(72) Erfinder: Bäumel, Helmut, D-64291 Darmstadt (DE)
(74) Vertreter: Haar, Lucas Heinz Jörn, Dipl.-Ing.

(57) **Zusammenfassung**

Bei einer Anhängerkupplung mit einem im Kraftweg zwischen einem Kupplungselement (15) und einem Trägerbauteil (9) angeordneten Kraftaufnehmer (8) zur Messung von Zug-, Druck- und/oder Stützkräften zwischen einem Zugfahrzeug und einem Anhänger ist der Kraftaufnehmer (8) als Rahmen mit zwei vertikal und zwei horizontal ausgerichteten Seiten ausgebildet ist, wobei zwei einander gegenüberliegende Seiten des Rahmens als Trägerleisten (11) ausgebildet sind, die mit einem Bauteil (9) des Zugfahrzeugs verbindbar sind. Die beiden anderen Seiten des Rahmens sind durch jeweils eine Meßfeder (13, 14) mit Anordnungen von mechanisch-elektrischen Wandlern (17, 18) gebildet und die Meßfedern (13, 14) sind mit einem Kupplungselement (15) verbunden, das symmetrisch zu den Mittelachsen des Rahmens angeordnet ist.

## Beschreibung

Die Erfindung betrifft eine Anhängerkupplung mit einem im Kraftweg zwischen einem Kupplungselement und einem Trägerbauteil angeordneten Kraftaufnehmer zur Messung von Zug-, Druck- und/oder Stützkräften zwischen einem Zugfahrzeug und einem Anhänger.

Anhängerkupplungen mit einem Kraftaufnehmer werden angewendet, um vor allem beim Abbremsen von Fahrzeuggespannen die Kräfte, die zwischen dem Zugfahrzeug und dem Anhänger auftreten, erfassen und als zusätzliche Regelgröße in der Regelung eines Antiblockiersystems verarbeiten zu können. Hierbei soll die horizontale und vielfach auch die vertikale Kraft, die auf die Anhängerkupplung einwirkt, gemessen werden. Die Erfassung der vertikalen Kraftkomponente ist bei immer häufiger eingesetzten Einachsanhängern von Bedeutung, da im Fahrbetrieb bei diesen ein hohes Moment um die Querachse entsteht, welches an der Anhängerkupplung eine vertikale Kraftkomponente hervorruft.

Aus der EP-A-0 428 890 ist eine Anhängerkupplung der eingangs genannten Art mit einer Kraftmeßzelle bekannt, die einen in einem topfartigen Gehäuse unter Bildung eines mit elastomerem Material gefüllten Ringspaltes angeordneten Kolben aufweist, der über das elastomere Material einen Drucksensor beaufschlagt. Diese bekannte Anordnung hat den Nachteil, daß die Maßgenauigkeit von den physikalischen Eigenschaften des elastomeren Materials beeinflußt wird. Bereits geringe Materialveränderungen, wie z.b. das von der Temperatur abhängige Verhalten des elastomeren Materials sowie Materialermüdung können zu Meßfehlern führen. Weiterhin ist der erforderliche Bauaufwand verhältnismäßig groß, da für jede Kraftrichtung eine Kraftmeßzelle mit Drucksensor benötigt wird.

Der Erfindung liegt die Aufgabe zugrunde, eine Anhängerkupplung mit einem Kraftaufnehmer zu schaffen, die sich durch geringen Bauaufwand, große Meßgenauigkeit und Temperaturunempfindlichkeit auszeichnet.

Diese Aufgabe wird erfindungsgemäß dadurch gelöst, daß als Kraftaufnehmer wenigstens eine Meßfeder mit daran angebrachten Anordnungen von Dehnungsmeßstreifen vorgesehen ist. Durch die erfindungsgemäße Ausgestaltung des Kraftaufnehmers läßt sich ein einfacher Aufbau der Anhängerkupplung und eine platzsparende Bauweise erzielen, da die Meßfeder wenig Bauraum benötigt. Das Biegeverhalten der Meßfeder ist in dem in Frage kommenden Temparaturbereich konstant und durch eine geeignete Brückenschaltung lassen sich Temperatureinflüsse an den Dehnungsmeßstreifen kompensieren, so daß sich insgesamt ein temperaturunabhängiges Meßsystem ergibt.

Besonders vorteilhaft ist eine erfindungsgemäße Ausgestaltung der Anhängerkupplung, bei der der Kraftaufnehmer als Rahmen mit zwei vertikal und zwei horizontal ausgerichteten Seiten ausgebildet ist, wobei zwei einander gegenüberliegende Seiten des Rahmens als Trägerleisten ausgebildet sind, die mit einem Bauteil des Zugfahrzeugs oder des Anhängers verbindbar sind, und wobei die beiden anderen Seiten des Rahmens durch jeweils eine Meßfeder mit Anordnungen von Dehnungsmeßstreifen gebildet sind und die Meßfedern mit einem Kupplungselement verbunden sind, das symmetrisch zu den Mittelachsen des Rahmens angeordnet ist. Diese Ausgestaltung hat den Vorteil, daß der Kraftaufnehmer als Flansch einer bei Anhängerkupplungen von Lastkraftwagen üblichen Stangenführung dienen kann, so daß der erfindungsgemäße Kraftaufnehmer ohne erhebliche bauliche Änderungen in Anhängerkupplungen herkömmlicher Bauart integriert oder auch zum Nachrüsten herkömmlicher Anhängerkupplungen verwendet werden kann. Mit Hilfe der beiden Meßfedern ist es ferner möglich, sowohl eine horizontale als auch eine vertikale Kraftkomponente zu messen.

Um die Anhängerkupplung höher belasten zu können als es der Meßbereich des Kraftaufnehmers vorsieht, sind nach einem weiteren Vorschlag der Erfindung Überlastanschläge vorgesehen. Bei dem als Rahmen ausgebildeten Kraftaufnehmer können die Überlastanschläge als Platten ausgebildet sein, die gemeinsam mit den Trägerleisten des Rahmens am Zugfahrzeug oder Anhänger befestigbar sind.

Die Meßfedern können bei der erfindungsgemäßen Anhängerkupplung vertikal oder horizontal angeordnet sein. Soll eine horizontale und eine vertikale Kraft erfaßt werden, so wird eine horizontale Anordnung der Meßfedern bevorzugt.

Als vorteilhaft hat sich weiterhin eine Anordnung von Dehnungsmeßstreifen auf sich in Verformungsrichtung erstreckende Flächen der Meßfedern erwiesen, wobei die Dehnungsmeßstreifen unter einem Winkel von 35° bis 55° zur Längsrichtung der Meßfedern angeordnet sind. Diese Anordnung der Dehnungsmeßstreifen zur Erfassung von Scherdehnungen hat den Vorteil, daß sich auf einer Fläche eine komplette Vollbrücke befindet, wodurch die Dehnungsmeßstreifenanordnung erheblich vereinfacht wird. Alternativ hierzu kann zur Erfassung von Biegedehnungen vorgesehen sein, daß Dehnungsmeßstreifen auf den beiden sich quer zur Verformungsrichtung ertreckenden Flächen der Meßfedern angeordnet sind.

Um die Dehnungsmeßstreifen vor Beschädigung zu schützen, können die Meßfedern Vertiefungen haben, in denen die Dehnungsmeßstreifen angeordnet sind. Die Vertiefungen können mit einem Kunststoff vergossen sein oder nach außen durch eine eingeschweißte Deckelplatte verschlossen sein.

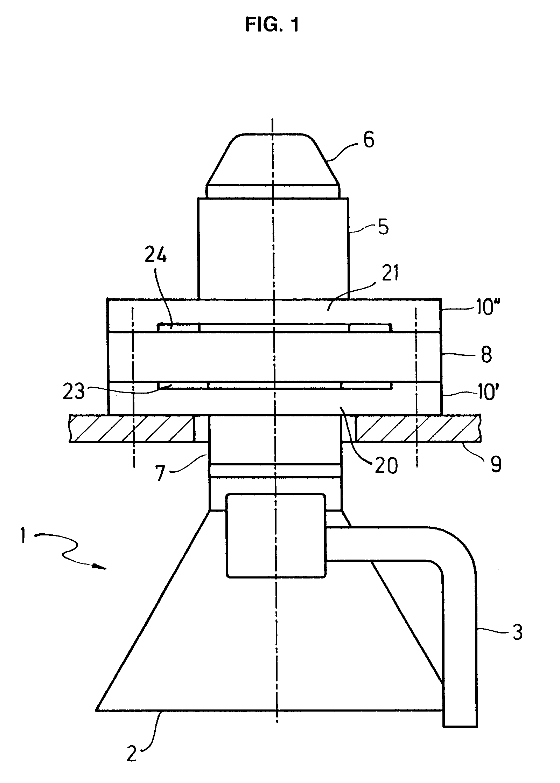

Die Erfindung wird nachfolgend anhand eines Ausführungsbeispiels näher erläutert, das in der Zeichnung dargestellt ist. Es zeigen
- Figur 1: eine Ansicht einer erfindungsgemäßen Anhängerkupplung von oben und
- Figur 2: eine perspektivische Darstellung der Stangenführung mit Kraftaufnehmer und Überlastplatte der Anhängerkupplung gemäß Figur 1.

Die dargestellte Anhängerkupplung 1 weist eine Kuppelkörper 2 üblicher Bauart mit einer Betätigungseinrichtung 3 für einen in der Zeichnung nicht sichtbaren Steckbolzen auf. Der Kuppelkörper 2 ist an einer Stange befestigt, die in einer Stangenführung 5 drehbar gelagert und über Axiallager 6, 7 an der Stangenführung 5 in axialer Richtung abgestützt ist. Die Stangenführung 5 ist mit einem als Flansch ausgebildeten Kraftaufnehmer 8 fest verbunden, der zwischen zwei Überlastplatten 10', 10'' angeordnet ist und zusammen mit diesen durch Schrauben mit dem Rahmenteil 9 eines Zugfahrzeugs fest verbunden ist.

Der Kraftaufnehmer 8 ist als rechteckiger Rahmen ausgebildet und seine Seiten sind vertikal bzw. horizontal ausgerichtet. Die vertikalen Seiten des Rahmens werden durch Trägerleisten 11 gebildet, die mit Durchgangsbohrungen 12 zur Aufnahme der Befestigungsschrauben versehen sind. Die horizontalen Seiten des Rahmens bilden zwei Meßfedern 13, 14, die senkrecht zur Rahmenebene elastisch verformbar sind und deren Enden einstückig mit den Trägerleisten 11 verbunden sind. Die Meßfedern 13, 14 sind mit einem zylinderförmigen Teil 15 der Stangenführung 5 verbunden, das in der Mitte des rahmenförmigen Kraftaufnehmers 8 angeordnet ist und dessen Zylinderachse senkrecht zur Rahmenebene verläuft. Auf der Ober- bzw. Unterseite haben die Meßfedern 13, 14 eine sich über ihre gesamte Länge erstreckende Vertiefung 16, in der zwei Gruppen von den Dehnungsmeßstreifen 17, 18 jeweils unter einem Winkel von 45° spiegelbildlich zur vertikalen Ebene durch die Zylinderachse angeordnet sind. Durch diese Anordnung der Meßstreifen 17, 18 werden Scherdehnungen erfaßt, wobei die Dehnungsmeßstreifen 17, 18 einer Meßfeder 13 bzw. 14 eine Meßbrücke bilden. Zur Abdeckung der Dehnungsmeßstreifen ist ein Deckel 19 vorgesehen, der mit dem Rand der Vertiefung 16 durch Schweißen verbunden ist.

Da es sich bei der Anhängerkupplung 1 um ein Sicherheitsbauteil handelt, muß eine Überlastbarkeit gewährleistet sein. Um eine Überlastung zulassen zu können, ohne daß der Kraftaufnehmer dabei beschädigt wird, sind beiderseits des Kraftaufnehmers 8 Überlastanschläge 20, 21 vorgesehen. Die Überlastanschläge 20, 21 werden durch die Überlastplatten 10', 10'' gebildet, die die gleiche Größe und das gleiche Lochbild wie der Kraftaufnehmer 8 und eine zentrale Bohrung 22 haben, in die die Stangenführung 5 hineinragt. Der erforderliche Nennmeßweg der Meßfedern 13, 14 wird bei dem beschriebenen Ausführungsbeispiel durch Ausnehmungen 23, 24 geschaffen, die in den Überlastplatten 10', 10'' auf der dem Kraftaufnehmer 8 zugekehrten Seite im Bereich der Meßfedern 13, 14 vorgesehen sind. Alternativ hierzu können jedoch auch Zwischenlagen zwischen den Überlastplatten und den Trägerleisten angeordnet werden. Ebenso können die Meßfedern 13, 14 gegenüber den Trägerleisten 11 geringere Dicke haben, durch die der erforderliche Meßweg gebildet wird. Ist das Rahmenteil 9 als Überlastanschlag geeignet, so kann zwischen dem Rahmenteil 9 und dem Kraftaufnehmer 8 auf eine weitere Überlastplatte verzichtet werden.

Der beschriebene Kraftaufnehmer 8 liefert mit Hilfe seiner beiden Meßfedern und der daran angeordneten Dehnungsmeßstreifen zwei Meßsignale, ein oberes Signal So und ein unteres Signal Su, die zur Berechnung der auf den Kuppelkörper 2 der Anhängerkupplung 1 einwirkenden Kraftkomponenten in einem nachgeschalteten Rechner oder einer Auswerteelektonik verarbeitet werden können. Durch Addition beider Signale erhält man einen Referenzwert für die Horizontalkraft, durch Subtraktion beider Signale einen Referenzwert für die Vertikalkraft. Aus den Vorzeichen der berechneten Größen kann auf die jeweilige Richtung der Kraftkomponenten geschlossen werden.

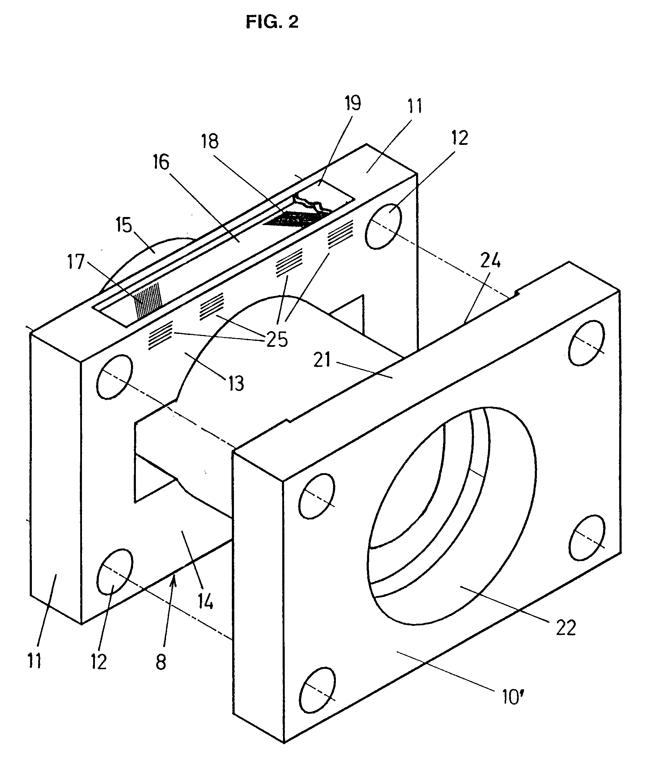

Wie in Figur 2 veranschaulicht, können anstelle der Dehnungsmeßstreifen 17, 18 die Meßfedern 13, 14 auf ihren beiden in Verformungsrichtung liegenden Seiten mit Dehnungsmeßstreifen 25 versehen sein. Der bauliche Aufwand ist hierbei jedoch größer.

## Patentansprüche

1. Anhängerkupplung mit einem im Kraftweg zwischen einem Kupplungselement und einem Trägerbauteil angeordneten Kraftaufnehmer zur Messung von Zug-, Druck- und/oder Stützkräften zwischen einem Zugfahrzeug und einem Anhänger, **dadurch gekennzeichnet**, daß als Kraftaufnehmer (8) wenigstens eine Meßfeder (13 bzw. 14) mit daran angebrachten Anordnungen von mechanisch-elektrischen Wandlern (17, 18) vorgesehen ist.

2. Anhängerkupplung nach Anspruch 1, dadurch gekennzeichnet, daß der Kraftaufnehmer (8) als Rahmen mit zwei vertikal und zwei horizontal ausgerichteten Seiten ausgebildet ist, wobei zwei einander gegenüberliegende Seiten des Rahmens als Trägerleisten (11) ausgebildet sind, die mit einem Bauteil (9) des Zugfahrzeugs oder des Anhängers verbindbar sind, und wobei die beiden anderen Seiten des Rahmens durch jeweils eine Meßfeder (13, 14) mit Anordnungen von mechanisch-elektrischen Wandlern (17, 18) gebildet sind und die Meßfedern (13, 14) mit einem Kupplungselement (15) verbunden sind, das symmetrisch zu den Mittelachsen des Rahmens angeordnet ist.

3. Anhängerkupplung nach einem der Ansprüche 1 oder 2, dadurch gekennzeichnet, daß beiderseits des Kraftaufnehmers (8) Überlastanschläge (20, 21) vorgesehen sind.

4. Anhängerkupplung nach Anspruch 3, dadurch gekennzeichnet, daß die Überlastanschläge (20, 21) als Überlastplatten (10', 10'') ausgebildet sind, die gemeinsam mit den Trägerleisten (11) des Rahmens am Zugfahrzeug oder Anhänger befestigbar sind.

5. Anhängerkupplung nach einem der vorhergehenden Ansprüche, dadurch gekennzeichnet, daß die Meßfedern (13, 14) vertikal oder horizontal angeordnet sind.

6. Anhängerkupplung nach einem der vorhergehenden Ansprüche, dadurch gekennzeichnet, daß die mechanisch-elektrischen Wandler Dehnungsmeßstreifen (17, 18) sind.

7. Anhängerkupplung nach einem der vorhergehenden Ansprüche, dadurch gekennzeichnet, daß die mechanisch-elektrischen Wandler (17, 18) auf in Verformungsrichtung erstreckenden Flächen der Meßfedern (13, 14) unter einem Winkel von 35° bis 55° zur Längsrichtung der Meßfedern (13, 14) angeordnet sind.

8. Anhängerkupplung nach einem der vorhergehenden Ansprüche, dadurch gekennzeichnet, daß mechanisch-elektrische Wandler (25) auf den beiden sich quer zur Verformungsrichtung erstreckenden Flächen der Meßfedern (13, 14) angeordnet sind.

9. Anhängerkupplung nach einem der vorhergehenden Ansprüche, dadurch gekennzeichnet, daß die Meßfedern (13, 14) Vertiefungen (16) haben, in denen die mechanisch-elektrischen Wandler (17, 18) angeordnet sind.

10. Anhängerkupplung nach Anspruch 9, dadurch gekennzeichnet, daß die Vertiefungen (16) mit einem Kunststoff vergossen sind oder nach außen durch eine eingeschweißte Deckelplatte (19) verschlossen sind.
